# EUROPÄISCHE PATENTANMELDUNG

(11) **EP 1 331 727 A2**
(43) Veröffentlichungstag der Anmeldung: **30.07.2003**
(21) Anmeldenummer: 03001118.3
(22) Anmeldetag: 20.01.2003
(51) Int. Cl.: H02P 3/04

(54) **Verfahren zum Halten eines Maschinenelements und/oder einer mit diesen verbundenen Last**

(30) Priorität: 29.01.2002 DE 10203375
(71) Anmelder: SIEMENS AKTIENGESELLSCHAFT, 80333 München (DE)
(72) Erfinder: Eckardt, Dieter, Dr., 91074 Herzogenaurach (DE); Hauf, Ronald, 91096 Möhrendorf (DE)

(57) **Zusammenfassung**

Die Erfindung zeigt ein sehr sicheres Verfahren zum Halten eines direkt oder indirekt von einem geregelten elektromotorischen Antrieb positionierbaren, nicht selbsthemmenden Maschinenelements und/oder einer mit diesem verbundenen Last unter Verwendung einer mechanischen Haltebremse. Dabei wird zum sicheren Halten der Antrieb (M) angehalten und die Bremse (BB) aktiviert, ohne dass der Antrieb (M) abgeschaltet wird, der vielmehr in Halteposition aktiv bleibt, wobei als Antrieb (M) ein sicherer Antrieb verwendet ist. Bei einem solchen Antrieb ist zwar kein ungewolltes Abschalten verhinderbar, aber ein ungewolltes Anlaufen ist sicher vermieden.

## Beschreibung

Die Erfindung bezieht sich auf ein Verfahren zum Halten eines direkt oder indirekt von einem geregelten elektromotorischen Antrieb positionierbaren, nicht selbsthemmenden Maschinenelements und/oder einer mit diesem verbundenen Last unter Verwendung einer mechanischen Haltebremse.

Beim Betrieb von Maschinen ist heutzutage der Aspekt der Sicherheitstechnik von hoher Bedeutung. Dies gilt insbesondere unter dem Gesichtspunkt, dass seit 1995 EG-Maschinenrichtlinien geschaffen worden sind. Aber auch außerhalb des EG-Raumes, so in den Vereinigten Staaten von Amerika und in Japan kommen beispielsweise aus nationalen Produkthaftungsgesetzen vergleichbare Anforderungen zum Tragen. Sicherheitstechnik kann somit als ein Focus des industriellen Weltmarktes betrachtet werden. Diese Tatsache hat auf dem Markt ein Bedürfnis nach Geräten und Funktionen entstehen lassen, die ein Umsetzen von sicherheitstechnischen Anforderungen ermöglichen. Im Bereich der numerischen Steuerungen wird heutzutage bereits in großen Umfang das Sicherheitskonzept "SINUMERIK SAFETY INTEGRATED ®" eingesetzt. Dieses Konzept lässt sich übrigens auch auf andere Branchen, z.B. auf den Bereich von Produktionsmaschinen, problemlos übertragen.

Die Erfindung betrifft nun einen weiteren speziellen Sicherheitsaspekt, der unter den verschiedensten Bedingungen immer wieder in Industrieanlagen auftaucht. Wenn nämlich Achsen bzw. Mechaniken bei abgeschalteten Antrieben nicht selbsthemmend sind, besteht die Gefahr, dass durch die Schwerkraft Abstürze erfolgen. Beispielsweise bei vertikalen Linearachsen, insbesondere hängenden Achsen, oder bei Rundachsen bzw. Spindeln mit asymmetrischer Gewichtsverteilung können damit solche gefahrbringenden Bewegungen entstehen.

Diese Achsen bzw. Mechaniken müssen daher durch geeignete Maßnahmen sicher im Stillstand gehalten werden.

Als dauernd aktives System kann dazu ein mechanischer Gewichtsausgleich dienen, der jedoch relativ großen konstruktiven Aufwand bedingt. In Ausnahmefällen kann ein Abfangen mittels Steckbolzen, Unterbauungen oder Stützen erfolgen, was aber ganz gezieltes Eingreifen voraussetzt und demzufolge nur für Sondersituationen wie Umbauten und Inbetriebnahmen in Frage kommt. Für immer wieder zeitweise betriebliche Aktivierung kommen daher nur Haltebremse oder Betriebsbremse in Frage.

Die bisher übliche Maßnahme zum sicheren Halt sieht so aus, dass der elektromotorischen Antrieb, von dem die Lage des Maschinenelementes und/oder der zugehörigen Last abhängt, stillgesetzt wird und dass mittels einer mechanischen, reibschlüssig wirkenden Bremse am jeweiligen Antrieb ein relativ sicherer Halt erreicht wird, wobei dann der Antrieb im Stillstand abgeschaltet wird.

Wenngleich diese Bremse durch spezielle Maßnahmen fortlaufend auf ihre Funktionsfähigkeit getestet werden kann, handelt es sich dabei dennoch um kein absolut sicheres System. Überprüft werden kann zwar durch elektronische Konzepte ein sicheres Ansteuern der Bremse und es kann auch durch Test des Reibmoments im Haltezustand ein Funktionstest der Bremse vorgenommen werden, jedoch besteht immer noch die Gefahr, dass durch plötzlich auftretende Störungen, beispielsweise ein völlig unerwartet eintretendes Verölen, die Bremskraft schlagartig reduziert wird. Diese Gefahr ist seit langem bekannt und so wurde auch schon vorgeschlagen, dass nicht nur eine, sondern mehrere Bremsen für erhöhte Sicherheitsanforderungen beim Halt verwendet werden. Dies bedingt jedoch einen sehr hohen technischen Aufwand.

Aufgabe der Erfindung ist es, ein Verfahren der eingangs genannten Art mit hoher Haltesicherheit zu schaffen.

Gemäß der Erfindung wird diese Aufgabe für ein Verfahren der eingangs genannten Art dadurch gelöst, dass zum sicheren Halten der Antrieb angehalten und die Bremse aktiviert wird, dass aber der Antrieb nicht abgeschaltet wird, sondern die Halteposition aktiv weiterhin aufrechterhält, wobei als Antrieb ein sicherer Antrieb verwendet ist, d.h., es ist zwar kein ungewolltes Abschalten des Antriebs verhinderbar, aber ein ungewolltes Anlaufen des Antriebs wird sicher vermieden.

Bei der Erfindung wird dabei von der Erkenntnis ausgegangen, dass ein Abschalten des Antriebs beim Halt, was die bislang übliche Maßnahme darstellt, stets deswegen vorgenommen wird, weil die Befürchtung besteht, dass der Antrieb durch ungewolltes Anlaufen eine Gefahr für das Haltesystem darstellt. Wenn nun jedoch Maßnahmen ergriffen sind, die ein solches ungewolltes Anlaufen des Antriebs verhindern, stellt ein derartiger Antrieb einen "sicheren Antrieb" dar und die als technisches Vorurteil bestehende Gefahrenvermutung liegt eben gerade nicht vor. Somit kann der Antrieb in überraschender Weise als redundantes, völlig von der mechanischen Bremse unabhängiges elektrisches Haltesystem verwendet werden.

Eine erste vorteilhafte Ausbildung der Erfindung ist dadurch gekennzeichnet, dass im Haltezustand die Regelparameter so adaptiert werden, dass Lageänderungen unterhalb einer vorgegebenen Schwelle vom Regler toleriert werden. Damit ist eine sehr gute Anpassung an den stationären Betrieb gewährleistet.

Dadurch, dass im Haltezustand die Regelparameter stabilisierend variiert werden, wird die Gefahr von ungewollten Schwingungsanregungen ebenfalls minimiert.

Ein Ausführungsbeispiel der Erfindung ist in der Zeichnung dargestellt und wird im folgenden näher erläutert. Dabei zeigen:
FIG 1 ein Strukturbild und
FIG 2 Diagramme zur Wirkungsweise.

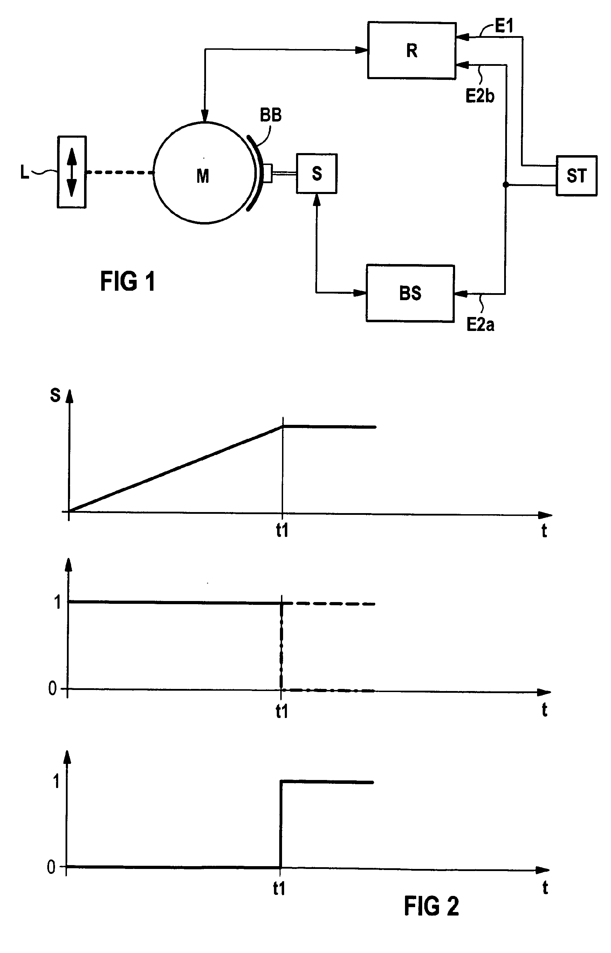

In der Darstellung gemäß FIG 1 ist in Form eines Strukturbildes die erfindungsgemäße Anordnung gezeigt. Mittels eines Antriebs, dem ein Elektromotor M und ein Regler R zu eigen sind, möge, wie durch eine gestrichelte starke Linie angedeutet ist, die sozusagen eine Getriebefunktion beinhaltet, eine Last L bidirektional bewegt werden können, wobei diese Bewegung durch einen offenen Doppelpfeil symbolisiert ist. Dazu liefert eine Steuerungseinrichtung ST Sollwerte der Bewegung an einen Eingang E1 des Reglers R, der demzufolge elektrische Ansteuersignale an den Motor M liefert und von diesem Lageund/oder Bewegungsrückmeldungssignale über die jeweilige Ist-Situation zurück erhält, wie dies durch einen dünnen Doppelpfeil angedeutet ist. Abhängig von den Sollwerten der Steuerungseinrichtung ST an den Regler R kann somit die Last L in beliebiger Art und Weise vertikal gehoben oder gesenkt werden.

Es möge nun der Fall eintreten, dass die Last L sicher an einer definierten Position gehalten werden soll. Dazu wird ein diesbezüglicher Lagesollwert von der Steuerung ST über den Eingang E1 dem Regler R mitgeteilt und die Last L dementsprechend positioniert. Wenn dies erfolgt ist, was der Steuerungseinrichtung ST durch der Übersichtlichkeit halber nicht dargestellte Signalflüsse vom Motor M oder vom Regler R rückgemeldet werden kann, wird seitens der Steuerungseinrichtung ST über einen Eingang E2a eine Bremsenansteuerung BS aktiviert, die über eine Spulenanordnung S und eine Bremsbacke BB den Motor M mechanisch bremst. Insofern entspricht die Anordnung gemäß FIG 1 dem bisherigen Vorgehen zum Halten.

Wesentlich für die Erfindung ist aber, dass dabei der Motor M an der Halteposition nicht abgeschaltet wird. Dies erfolgt unter der Voraussetzung, dass das System insgesamt einen sicheren Antrieb darstellt, d.h., dass der Motor M gegen ungewollte Lageänderungen durch elektronische Maßnahmen gesichert ist. Dazu wird über einen Eingang E2b dem Regler R mitgeteilt, dass eine andauernde Positionsregelung auf die Position des Halts erfolgen soll. Dazu kann der Regler R bezüglich seiner Regelparameter so adaptiert werden, dass Lageänderungen unterhalb einer vorgegebenen Schwelle toleriert werden und ebenso können die Regelparameter stabilisierend variiert werden, da keine hochdynamische Regelung erforderlich ist. Ungewollte Schwingungsanregungen werden damit unterbunden.

Die Last L wird beim erfindungsgemäßen sicheren Halt damit durch zwei völlig unabhängige Systeme gehalten, nämlich zum einen durch die Bremse und zum anderen durch die elektrische Lageregelung.

Dieser Sachverhalt ist auch in den Diagrammen gemäß FIG 2 gezeigt, bei denen das obere Diagramm ein Zeit-Weg-Diagramm für die Last L zeigt und wobei die darunter liegenden zeitgleichen Diagramme das Wirksamschalten des elektrischen und des mechanischen Bremsens zeigen. Im oberen Diagramm ist dargestellt, dass abhängig von einer Zeit t die Last ihren Weg s bis zu einer Zeit t1 ansteigend variieren möge, wobei dort ein sicherer Halt erfolgen möge. Dies zeigt sich darin, dass der Weg s unverändert bleibt. Im mittleren Diagramm ist die Aktivität des elektromotorischen Antriebs gezeigt (aktiv ist durch logisch "1", inaktiv durch logisch "0" symbolisiert). Durch eine durchgezogene Linie bis zur Zeit t1 ist der übliche Regelbetrieb angedeutet, von dort an wird der Antrieb weiterhin aktiv gehalten, wobei jedoch die Regelparameter variiert werden, wie oben bereits berichtet. Dies ist durch eine anschließende gestrichelte Linie verdeutlicht. Durch eine strichpunktierte Linie ist gezeigt, wie beim bislang üblichen Betrieb der elektrische Antrieb von der Zeit t1 an völlig deaktiviert worden wäre.

Im unteren Diagramm ist das Ansprechen der mechanischen Bremse ab dem Zeitpunkt t1 gezeigt, was sowohl beim üblichen wie beim erfinderischen Betrieb in gleicher Weise erfolgt.

## Patentansprüche

1. Verfahren zum Halten eines direkt oder indirekt von einem geregelten elektromotorischen Antrieb positionierbaren, nicht selbsthemmenden Maschinenelement und/oder einer mit diesem verbundenen Last unter Verwendung einer mechanischen Haltebremse, **dadurch gekennzeichnet, dass** zum sicheren Halten der Antrieb (M) angehalten und die Bremse (BB) aktiviert wird, dass aber der Antrieb (M) nicht abgeschaltet wird, sondern die Halteposition aktiv weiterhin aufrechterhält, wobei als Antrieb (M) ein sicherer Antrieb verwendet ist, d.h., es ist zwar kein ungewolltes Abschalten des Antriebs (M) verhinderbar, aber ein ungewolltes Anlaufen des Antriebs (M) ist sicher gewährleistet.

2. Verfahren nach Anspruch 1, **dadurch gekennzeichnet, dass** im Haltzustand die Regelparameter so adaptiert werden, dass Lageänderungen unterhalb einer vorgegebenen Schwelle vom Regler (R) toleriert werden.

3. Verfahren nach Anspruch 1 oder 2, **dadurch gekennzeichnet, dass** im Haltzustand die Regelparameter stabilisierend variiert werden.
